# EUROPÄISCHE PATENTSCHRIFT

(11) **EP 3 953 620 B1**
(45) Veröffentlichungstag und Bekanntmachung des Hinweises auf die Patenterteilung: **03.04.2024**
(21) Anmeldenummer: 19718106.8
(22) Anmeldetag: 10.04.2019
(51) Int. Cl.: F01P 7/16, F16K 5/04, F01P 7/14, F16K 31/04, F16K 31/53

(54) **DREHSCHIEBERVENTIL FÜR EIN KRAFTFAHRZEUG**
ROTARY SLIDE VALVE FOR A MOTOR VEHICLE
SOUPAPE À TIROIR ROTATIF POUR VÉHICULE AUTOMOBILE

(43) Veröffentlichungstag der Anmeldung: 16.02.2022
(73) Patentinhaber: Pierburg GmbH, 41460 Neuss (DE)
(72) Erfinder: TÖNNESMANN, Andres, 41460 Neuss (DE); SANDERS, Michael, 41460 Neuss (DE); BADEN, Matthias, 41460 Neuss (DE); GISSING, Jörg, 41460 Neuss (DE)
(74) Vertreter: terpatent Patentanwälte und European Patent Attorneys ter Smitten Eberlein -Van Hoof
(86) Internationale Anmeldenummer: PCT/EP2019/059056
(87) Internationale Veröffentlichungsnummer: WO 2020/207574

(56) Entgegenhaltungen:
- EP-A1- 3 001 078
- EP-A1- 3 306 057
- EP-A2- 2 290 273
- WO-A1-2015/004646
- CN-Y- 2 428 645
- DE-T5- 10 392 436
- GB-A- 1 330 419
- US-A- 5 239 961

## Beschreibung

Die Erfindung betrifft ein Drehschieberventil für ein Kraftfahrzeug mit einem Antriebsmotor, einem Getriebe, welches mittels des Antriebsmotors in Drehung versetzbar ist, einem Drehschieberglied mit zumindest einer Durchflussöffnung, und einem Strömungsgehäuse, in dem das Drehschieberglied gelagert ist und welches zumindest einen Einlass und zumindest einen Auslass aufweist, welche über die Durchflussöffnung des Drehschiebergliedes fluidisch verbindbar sind.

Derartige Drehschieberventile werden beispielsweise als Kühlmittelventile in den Kühlkreisläufen von Verbrennungsmotoren oder auch in Kühlkreisläufen für Elektromotoren oder Batterien in Elektrofahrzeugen oder Hybridfahrzeugen verwendet. Durch Drehung des Drehschiebergliedes gelangt die Durchflussöffnung in Überdeckung mit dem Einlass und/oder dem Auslass, wodurch eine fluidische Verbindung hergestellt wird und das Kühlmittel vom Einlass zum Auslass strömen kann. Diese Drehschieberventile weisen entweder eine Öffnung auf, über die auch eine Regelung des Kühlmittelstromes entsprechend des Überdeckungsgrades der Durchflussöffnung zum Einlass beziehungsweise zum Auslass möglich ist oder mehrere Durchflussöffnungen auf, die mit verschiedenen Teilkreisen des Kühlkreislaufs in Verbindung gebracht werden können. Die hierzu verwendeten Drehschieberglieder weisen üblicherweise eine Zylinder-, Hohlzylinder- oder Kugelform auf, so dass sich die Durchflussöffnungen über einen Mantelflächenabschnitt von einer Seitenfläche zur gegenüberliegenden Seitenfläche erstrecken. Die Drehschieberglieder sind gegenüber dem umliegenden Strömungsgehäuse üblicherweise durch an den Einlässen beziehungsweise Auslässen angeordnete Dichtelemente abgedichtet, um Leckageströmungen zu verhindern.

Der Antrieb der Drehschieberglieder erfolgt zumeist über einen Elektromotor, der vorzugsweise als elektronisch kommutierter Motor mit am Rotor befestigten Permanentmagneten ausgeführt ist und dessen Abtrieb entweder direkt oder über ein Getriebe mit dem Drehschieberglied verbunden ist. Bei einem direkten Antrieb ergibt sich jedoch das Problem, dass eine feinfühlige Verstellung des Drehschiebergliedes nicht möglich ist und der zum Aufbringen des Drehmomentes benötigte Antriebsmotor unverhältnismäßig groß zu dimensionieren wäre. Zudem ist für eine Ventilverstellung oftmals nur eine Bewegung des Ventilorgans von unter 360° erforderlich.

Daher wird in der DE 10 2017 105 696 A1 ein Drehschieberventil vorgeschlagen, welches ein zwischengeschaltetes Getriebe aufweist, welches als Harmonie Drive Wellgetriebe ausgeführt ist. Dabei ist ein Außenrotor des Elektromotors als Wellorgan in einer leicht elliptischen Form ausgeführt, auf dem ein flexibles Zahnrad mit einer Außenverzahnung gelagert ist, welches in eine Innenverzahnung eines Strömungsgehäuses greift. Das flexible Zahnrad ist über eine Stange mit dem Drehschieberglied verbunden, so dass dieses mit dem flexiblen Zahnrad gedreht wird. Da sich die Zähneanzahl der Innenverzahnung des Strömungsgehäuses lediglich um zwei Zähne von der Zähneanzahl des flexiblen Zahnrades unterscheidet, wird eine sehr feinfühlige Verstellung erreicht. Nachteilig an einer solchen Ausführung ist jedoch, dass sehr hohe Toleranzanforderungen an die Bauteile gestellt werden müssen und die mechanische Arbeit für die Reibung zwischen dem Rotor und dem flexiblen Zahnrad sowie für die Verformung des flexiblen Zahnrades zusätzlich aufgebracht werden muss.

Des Weiteren wird in der EP 2 290 273 A2 ein Mehrwege-Drehschieberventil vorgeschlagen, dessen Drehschieberglied mit einer Welle verbunden ist, welche als Ausgangsglied eines Umlaufgetriebes dient.

Die EP 3 001 078 A1 offenbart eine Klappe, deren Welle mit einem Getriebe verbunden ist, welches über einen Elektromotor angetrieben wird.

Die DE 103 92 436 T5 offenbart ein Flachdrehschieberventil, welches über einen Elektromotor angetrieben wird, dessen Ausgangswelle mit einem Außenzahnrad des Drehschiebergliedes wirkverbunden ist.

Die US 5,239,961 B offenbart ein zylindrisches Mehrwegeventil, welches über einen Außenläufermotor angetrieben wird, dessen Rotor direkt mit der Welle des Drehschiebergliedes verbunden ist.

Es stellt sich daher die Aufgabe, ein Drehschieberventil zu schaffen, welches sehr feinfühlig verstellbar ist und auch bei Berührung mit dem Medium eine lange Lebensdauer sowie einen ausreichenden Wirkungsgrad aufweist. Des Weiteren soll auf dynamische Dichtungen am Getriebe verzichtet werden können und eine günstige Herstellbarkeit erreicht werden.

Diese Aufgabe wird durch ein Drehschieberventil für ein Kraftfahrzeug mit den Merkmalen des Hauptanspruchs 1 gelöst.

Dadurch, dass das Getriebe ein hochübersetzendes koaxiales Umlaufgetriebe ist, welches als Wolfromgetriebe ausgebildet ist, dessen zweites Hohlrad und an einer radialen Innenseite des Drehschiebergliedes ausgebildet ist, und welches in einem Raum angeordnet ist, der fluidisch mit der Durchflussöffnung des Drehschiebergliedes verbunden ist, wird ein Drehschieberventil geschaffen, bei dem auf dynamische Dichtungen verzichtet werden kann, da das Getriebe nasslaufend ausgebildet werden kann, also im zu regelnden Fluid angeordnet ist. Das Umlaufgetriebe ist als Getriebe mit einer sehr hohen Übersetzung ausführbar, so dass eine sehr feinfühlige Verstellung ermöglicht wird und benötigt lediglich einen geringen Bauraum. Ein solches Getriebe ist in Rückwärtsrichtung selbsthemmend, so dass die Ventilposition ohne Bestromung des Antriebsmotors oder ein Nachregeln erhalten bleibt. Des Weiteren können auf einfache Weise besonders hohe Übersetzungen erreicht werden. Dadurch, dass an einer radialen Innenseite des Drehschiebergliedes ein zweites Hohlrad des Wolfromgetriebes ausgebildet ist, welches entweder einstückig mit dem Drehschieberglied hergestellt werden oder an diesem befestigt werden, wird der axiale Bauraum sehr klein gehalten. Auch entfällt eine andersartige Bewegungskopplung des Hohlrades zum Drehschieberglied.

Vorzugsweise ist der Raum zumindest radial durch das Strömungsgehäuse und ein mit dem Strömungsgehäuse verbundenes Aktorgehäuse begrenzt. Auf Dichtungen zur Abdichtung verschiedener mit dem Förderfluid gefüllter Gehäuse zueinander kann entsprechend verzichtet werden. Zusätzlich sinkt die Anzahl der Bauteile, wodurch auch die Montage deutlich vereinfacht wird.

Vorteilhafterweise ist der Rotor des Antriebsmotors in dem Raum angeordnet, in dem das Wolfromgetriebe angeordnet ist. Hierbei handelt es sich um einen permanentmagnetischen Rotor, insbesondere eines elektronisch kommutierten Elektromotors. Dieser ist ebenfalls unempfindlich gegen das Förderfluid, weist also wie die Zahnräder des Getriebes eine hohe chemische und physikalische Beständigkeit auf. Entsprechend befinden sich nunmehr alle bewegenden Teile des Drehschieberventils in einem gemeinsamen Raum, so dass eine Abdichtung zueinander entfällt. Entsprechend sind keine dynamisch belasteten Dichtungen erforderlich.

Eine besonders einfache Abtrennung dieses mit Fluid gefüllten Raumes ergibt sich, wenn der Stator des Antriebsmotors vom Rotor durch einen Spalttopf getrennt ist. Das offene Ende des Spalttopfes weist entsprechend zu dem Teil des Raumes, in dem sich das Getriebe befindet, so dass alle elektronischen Bauteile außerhalb des Raumes angeordnet sind. Der Raum kann entsprechend vollständig durch das Strömungsgehäuse und den Spalttopf begrenzt werden, so dass lediglich der Spalttopf zum Strömungsgehäuse abgedichtet werden muss.

Der Spalttopf ist dabei vorzugsweise einstückig mit dem Aktorgehäuse ausgebildet, wodurch sowohl eine zusätzliche Montage entfällt als auch auf weitere Dichtungen verzichtet werden kann.

Besonders vorteilhaft ist es, wenn der Spalttopf einen sich radial erstreckenden Kragen aufweist, der den Raum, in dem der Rotor und das Wolfromgetriebe angeordnet sind, axial in Richtung des Stators begrenzt. Ein Eindringen von Fluid in den Statorbereich wird so zuverlässig vermieden. Des Weiteren kann das Strömungsgehäuse zylindrisch ausgeführt werden, wodurch die Montage erleichtert wird und die Abdichtung zwischen dem Strömungsgehäuse und dem Spalttopf auf einfache Weise über den Innenumfang des Aktorgehäuses erfolgen kann.

Zur Verringerung der zu montierenden Einzelteile ist es besonders bevorzugt, wenn sich vom Kragen des Spalttopfes axial ein erstes Hohlrad des Wolfromgetriebes erstreckt, welches entsprechend als feststehendes Hohlrad des Wolfromgetriebes dient. Der Spalttopf kann in diesem Fall auch einstückig durch Spritzgießen mit dem Kragen und dem Hohlrad hergestellt werden, so dass zusätzliche Montageschritte entfallen.

Des Weiteren ist es vorteilhaft, wenn der Rotor des Antriebsmotors mit einem Sonnenrad verbunden ist, welches mit dem Rotor auf einer Abtriebsachse des Wolfromgetriebes gelagert ist, welches mit zumindest einem Planetenrad kämmt, das mit dem ersten Hohlrad und dem zweiten Hohlrad kämmt, wobei die Zähnezahlen der beiden Hohlräder unterschiedlich sind. Insbesondere unterscheidet sich die Zähneanzahl der beiden Hohlräder lediglich um wenige Zähne, was eine sehr feinfühlige Verstellung ermöglicht. Ein derartiges Wolfromgetriebe ist dennoch leicht zu fertigen und zu montieren und benötigt nur einen geringen Bauraum.

Des Weiteren weist das Wolfromgetriebe vorteilhafterweise mehrere Planetenräder auf, in deren Zwischenraum Füllstücke angeordnet sind, die an einem Planetenradträger befestigt oder einstückig mit dem Planetenradträger ausgebildet sind. Die Füllstücke können dabei entweder einteilig mit dem Planetenradträger hergestellt oder an diesem befestigt werden. Durch diese Füllstücke können die hydrodynamischen Verluste reduziert werden.

Die Planetenräder sind vorzugsweise auf Achsen eines freischwimmend gelagerten Planetenradträgers gelagert, wodurch deren Position im Getriebe eindeutig festgelegt ist.

Alternativ können die Planetenräder aber auch freischwimmend gelagert sein, wodurch Bauteile eingespart werden und eine Ausrichtung der Planetenräder im Betrieb erfolgt.

Der Antriebsmotor wird vorzugsweise als zweiphasiger Klauenpolmotor ausgeführt, dessen Stator sich auf der trockenen Seite des Spalttopfes befindet. Auf Grund des größeren Luftspalts wird dabei vorteilhafterweise eine Ausführung mit nicht mehr als vier Polpaaren je Phase gewählt. Über eine angepasste Kommutierung, welche ähnlich einer Sinuskommutierung, jedoch phasenversetzt für die beiden Spulen der Klauenpolmaschine erfolgt, kann ein gleichmäßiger Drehmomentverlauf eingestellt werden sowie jede beliebige Rotorposition angefahren werden.

Es wird somit ein Drehschieberventil für ein Kraftfahrzeug, insbesondere für den Kühlmittel- oder Kältemittelkreislauf geschaffen, mit dem auf sehr kleinem Bauraum eine sehr feinfühlige und entsprechend genaue Positionierung möglich wird. Dabei ist die Montage durch die geringe Anzahl an Bauteilen und den einfachen Aufbau des Getriebes deutlich erleichtert. Insbesondere kann jedoch vollständig auf dynamische Dichtungen verzichtet werden, da das Getriebe und der Rotor des Antriebsmotors nasslaufend ausgeführt sind.

Ein Ausführungsbeispiel eines erfindungsgemäßen Drehschieberventils, welches für einen Kühlmittelkreislauf geeignet ist und dort als Regel- oder Stellventil verwendet werden kann ist in den Figuren dargestellt und wird nachfolgend beschrieben.
Figur 1 zeigt eine perspektivische Seitenansicht eines erfindungsgemäßen Drehschieberventils für den Kühlmittelkreislauf eines Kraftfahrzeugs in teilweise aufgeschnittener Darstellung.
Figur 2 zeigt eine perspektivische Seitenansicht des Drehschiebergliedes mit den Planetenrädern sowie eines Planetenradträgers mit Füllstücken eines erfindungsgemäßen Drehschieberventils gemäß Figur 1.
Figur 3 zeigt eine Seitenansicht des erfindungsgemäßen Drehschieberventils gemäß Figur 1 in geschnittener Darstellung.
Figur 4 zeigt eine Seitenansicht eines alternativen erfindungsgemäßen Drehschieberventils in geschnittener Darstellung.

Das erfindungsgemäße Drehschieberventil weist ein Strömungsgehäuse 10 mit einem Einlass 12 und einem Auslass 14 auf, die im vorliegenden Ausführungsbeispiel in einem radial verlaufenden Einlassstutzen 16 und einem um 90° zum Einlassstutzen 16 versetzten, ebenfalls radial verlaufenden Auslassstutzen 18 ausgebildet sind. Im Strömungsgehäuse 10, welches im Wesentlichen hohlzylindrisch geformt ist, ist ein Drehschieberglied 20 auf einer Abtriebsachse 22 befestigt, welches eine Durchflussöffnung 24 aufweist, über die die fluidische Verbindung zwischen dem Einlass 12 und dem Auslass 14 hergestellt werden kann. Die Durchflussöffnung 24 ist in vorliegender Ausführung lediglich als sich etwa über den halben Umfang des ansonsten etwa zylindrischen Drehschiebergliedes 20 erstreckende Ausnehmung ausgeformt.

Die Abtriebsachse 22 ist an ihrem einen axialen Ende in einer Aufnahmeöffnung 26 an einem das Strömungsgehäuse 10 verschließenden Boden 28 gelagert und an ihrem entgegengesetzten axialen Ende in einem Boden 30 eines Spalttopfes 32.

Das Drehschieberventil weist einen Antriebsmotor 34 auf, der als zweiphasiger Klauenpolmotor ausgeführt ist, wobei jede Phase maximal vier Polpaare aufweist. Durch eine entsprechende Kommutierung, welche phasenversetzt für zwei Spulen 36 eines Stators 38 des Klauenpolmotors stattfindet, kann ein Rotor 40, der auf der Abtriebsachse 22 drehbar gelagert ist, gleichmäßig angetrieben und auf beliebige Drehpositionen verstellt werden.

Der Rotor 40 ist vom Stator 38 durch den Spalttopf 32 getrennt, welcher einstückig mit einem Aktorgehäuse 42 ausgebildet ist, indem sich ein Kragen 43 radial nach außen vom Spalttopf 32 zum umliegenden Aktorgehäuse 42 erstreckt, der axial den Stator 38 begrenzt. Das Aktorgehäuse 42 umgibt den Antriebsmotor 34 radial und ist am Strömungsgehäuse 10 befestigt, so dass im radial Inneren des Strömungsgehäuses 10 zwischen dem Antriebsmotor 34 und dem Drehschieberglied 20 ein Raum 44 geschaffen wird, der axial durch den Spalttopf 32 und dessen Kragen 43 und radial durch das Aktorgehäuse 42 und das Strömungsgehäuse 10 begrenzt wird und an der axial gegenüberliegenden Seite durch den Boden 28 des Strömungsgehäuses 10 begrenzt wird, so dass dieser Raum 44 mit dem durch das Drehschieberglied 20 geregelten Fluid gefüllt ist. Des Weiteren ist ein Abstand zwischen dem Kragen 43 des Spalttopfes 32 und dem Drehschieberglied 20 vorhanden, so dass im Raum 44 axial zwischen dem Kragen 43 des Spalttopfes 32 und dem Drehschieberglied 20 erfindungsgemäß ein Wolfromgetriebe 46 angeordnet ist, mittels dessen die Bewegung des Antriebsmotors 34 mit einer hohen Übersetzung auf das Drehschieberglied 20 übertragen wird.

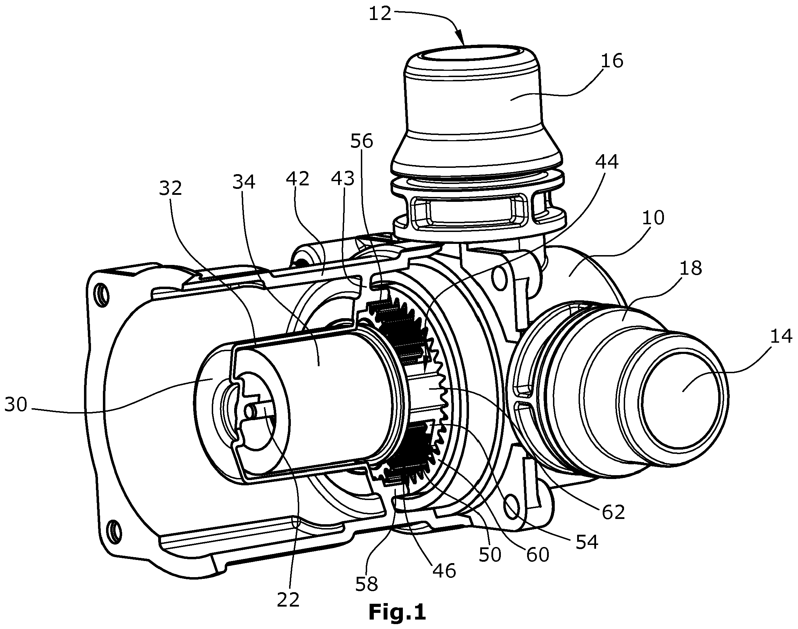

Das Wolfromgetriebe 46 besteht aus einem Sonnenrad 48, welches drehfest mit dem Rotor 40 verbunden und auf der Abtriebsachse 22 gelagert ist und mit zwei Planetenrädern 50 kämmt, die im Ausführungsbeispiel gemäß der Figuren 1 bis 3 auf Achsen 52 eines Planetenradträgers 54 drehbar gelagert sind. Der Planetenradträger 54 ist schwimmend im Drehschieberglied 20 gelagert. Die Planetenräder 50 greifen mit einem ersten axialen Abschnitt in ein erstes, feststehendes Hohlrad 56, welches an der Innenseite eines ringförmigen axialen Vorsprungs 58 ausgebildet ist, der sich vom Kragen 43 des Spalttopfes 32 axial zum Drehschieberglied 20 erstreckt. Ein zweiter axialer Abschnitt der Planetenräder 50 greift in ein zweites Hohlrad 60, welches an der radialen Innenseite eines ringförmigen Vorsprungs am Drehschieberglied 20 ausgebildet ist und entsprechend mit dem Drehschieberglied 20 gedreht wird. Das erste Hohlrad 56 unterschiedet sich vom zweiten Hohlrad 60 lediglich um wenige Zähne, wodurch bei Drehung des Antriebsmotors 34 eine sehr hohe Übersetzung entsteht und das Drehschieberglied 20 sehr genau eingestellt werden kann.

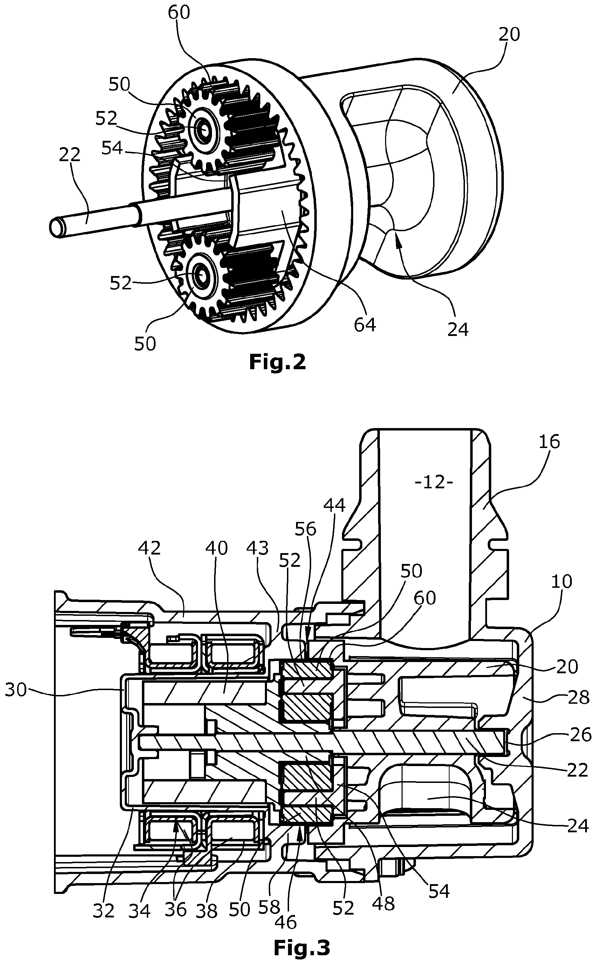

In der Figur 2 sind des Weiteren am Planetenradträger 54 ausgebildete Füllstücke 62 zu erkennen, die in Umfangsrichtung zwischen den Planetenrädern 50 angeordnet sind und durch die die hydrodynamischen Verluste des im Kühlmittel laufenden Wolfromgetriebes 46 reduziert werden.

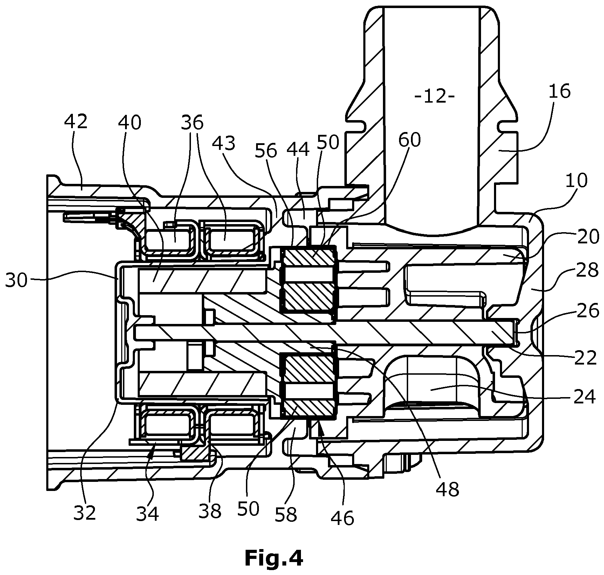

Bei dem Ausführungsbeispiel gemäß der Figur 4 wird auf einen Planetenträger verzichtet. Stattdessen werden die Planetenräder 50 schwimmend zwischen den Hohlrädern 56, 60 und dem Sonnenrad 48 gelagert, indem sie axial zwischen dem Rotor 40 des Antriebsmotors 34 und Wandstücken des Drehschiebergliedes 20 drehbar im Fluid gehalten werden.

Wird der Stator 38 des Antriebsmotors 34 entsprechend bestromt, wird das entstehende magnetische Feld durch den Spalttopf 32 auf den Rotor 40 übertragen, der entsprechend mit dem Sonnenrad 48 auf der Abtriebsachse 22 gedreht wird. Durch die Drehung des Sonnenrades 48 rollen die Planetenräder 50 auf dem Sonnenrad 48 und dem feststehenden ersten Hohlrad 56 ab und übertragen durch die Zähnezahldifferenz die Bewegung mit sehr hoher Übersetzung auf das zweite Hohlrad 60 und damit auch auf das Drehschieberglied 20, welches somit zum Öffnen und Schließen einer Verbindung zwischen dem Einlass 12 und dem Auslass 14 gedreht wird.

Der Raum 44, in dem sich das Wolfromgetriebe 46 und der Rotor 40 und das Drehschieberglied 20 befinden, ist mit dem zu förderndem Fluid gefüllt. Dies bedeutet, dass alle sich drehenden Teile in diesem Raum 44 angeordnet sind, so dass keine Dichtung entlang der sich drehenden Teile vorgenommen werden muss. Es ist lediglich das Strömungsgehäuse nach außen zum Aktorgehäuse abzudichten, welche jedoch beide still stehen, so dass eine statische Dichtung verwendet werden kann. Auf dynamische Dichtungen kann entsprechend vollständig verzichtet werden.

Es sollte deutlich sein, dass verschiedene Modifikationen im Vergleich zu den Ausführungsbeispielen für den Fachmann naheliegen, ohne den Schutzbereich des Hauptanspruchs zu verlassen. So können Einlass und Auslass auch gegenüberliegend oder andersartig zueinander angeordnet werden oder mehrere Ein- und Auslässe ausgebildet werden, so dass die Durchströmungsöffnung oder -Öffnungen entsprechend im Drehschieberglied anders platziert werden. Auch können mehrere Planetenräder oder nur eines verwendet werden. Ebenso kann auf die Füllstücke gegebenenfalls verzichtet werden. Zusätzlich eignen sich auch andere insbesondere elektrisch kommutierte Antriebsmotoren als der beschriebene Klauenpolmotor. Auch sind andere koaxiale Umlaufgetriebe einsetzbar. Weitere konstruktive Änderungen sind selbstverständlich ebenfalls denkbar.

## Patentansprüche

1. Drehschieberventil für ein Kraftfahrzeug mit
einem Antriebsmotor (34),
einem Getriebe (46), welches mittels des Antriebsmotors (34) in Drehung versetzbar ist,
einem Drehschieberglied (20) mit zumindest einer Durchflussöffnung (24),
einem Strömungsgehäuse (10), in dem das Drehschieberglied (20) gelagert ist und welches zumindest einen Einlass (12) und zumindest einen Auslass (14) aufweist, welche über die Durchflussöffnung (24) des Drehschiebergliedes (20) fluidisch verbindbar sind,
**dadurch gekennzeichnet, dass**
das Getriebe ein hochübersetzendes koaxiales Umlaufgetriebe (46) ist, welches als Wolfromgetriebe ausgebildet ist, dessen zweites Hohlrad (60) an einer radialen Innenseite des Drehschiebergliedes (20) ausgebildet ist, und welches in einem Raum (44) angeordnet ist, der fluidisch mit der Durchflussöffnung (24) des Drehschiebergliedes (20) verbunden ist.

2. Drehschieberventil für ein Kraftfahrzeug nach Anspruch 1,
**dadurch gekennzeichnet, dass**
der Raum (44) radial durch das Strömungsgehäuse (10) und ein mit dem Strömungsgehäuse (10) verbundenes Aktorgehäuse (42) begrenzt ist.

3. Drehschieberventil für ein Kraftfahrzeug nach Anspruch 1 oder 2,
**dadurch gekennzeichnet, dass**
der Rotor (40) des Antriebsmotors (34) in dem Raum (44) angeordnet ist, in dem das hochübersetzende koaxiale Umlaufgetriebe (46) angeordnet ist.

4. Drehschieberventil für ein Kraftfahrzeug nach Anspruch 3,
**dadurch gekennzeichnet, dass**
ein Stator (38) des Antriebsmotors (34) vom Rotor (40) durch einen Spalttopf (32) getrennt ist.

5. Drehschieberventil für ein Kraftfahrzeug nach Anspruch 4,
**dadurch gekennzeichnet, dass**
der Spalttopf (32) einstückig mit dem Aktorgehäuse (42) ausgebildet ist.

6. Drehschieberventil für ein Kraftfahrzeug nach Anspruch 4 oder 5,
**dadurch gekennzeichnet, dass**
der Spalttopf (32) einen sich radial erstreckenden Kragen (43) aufweist, der den Raum (44), in dem der Rotor (40) und das Wolfromgetriebe (46) angeordnet sind, axial in Richtung des Stators (38) begrenzt.

7. Drehschieberventil für ein Kraftfahrzeug nach Anspruch 6,
**dadurch gekennzeichnet, dass**
sich vom Kragen (43) des Spalttopfes (32) axial ein erstes Hohlrad (56) des Wolfromgetriebes (46) erstreckt.

8. Drehschieberventil für ein Kraftfahrzeug nach Anspruch 7,
**dadurch gekennzeichnet, dass**
der Rotor (40) des Antriebsmotors (34) mit einem Sonnenrad (48) verbunden ist, welches mit dem Rotor (40) auf einer Abtriebsachse (22) des Wolfromgetriebes (46) gelagert ist, welches mit zumindest einem Planetenrad (50) kämmt, das mit dem ersten Hohlrad (56) und dem zweiten Hohlrad (60) kämmt, wobei die Zähnezahlen der beiden Hohlräder (56, 60) unterschiedlich sind.

9. Drehschieberventil für ein Kraftfahrzeug nach Anspruch 8,
**dadurch gekennzeichnet, dass**
das Wolfromgetriebe (46) mehrere Planetenräder (50) aufweist, in deren Zwischenräumen Füllstücke (62) angeordnet sind, die an einem Planetenradträger (54) befestigt oder einstückig mit dem Planetenradträger (54) ausgebildet sind.

10. Drehschieberventil für ein Kraftfahrzeug nach einem der Ansprüche 8 oder 9,
**dadurch gekennzeichnet, dass**
die Planetenräder (50) auf Achsen (52) des freischwimmend gelagerten Planetenradträgers (54) gelagert sind.

11. Drehschieberventil für ein Kraftfahrzeug nach Anspruch 8,
**dadurch gekennzeichnet, dass**
die Planetenräder (50) freischwimmend ausgebildet sind.

12. Drehschieberventil für ein Kraftfahrzeug nach einem der vorhergehenden Ansprüche,
**dadurch gekennzeichnet, dass**
der Antriebsmotor (34) als zweiphasiger Klauenpolmotor ausgeführt ist.

## Claims

1. Rotary slide valve for a motor vehicle with
a drive motor (34),
a transmission (46) which can be set in rotation by means of the drive motor (34),
a rotary slide valve member (20) with at least one flow opening (24),
a flow housing (10), in which the rotary slide valve member (20) is beared and which comprises at least one inlet (12) and at least one outlet (14), which can be fluidically connected via the flow opening (24) of the rotary slide valve member (20),
**characterised in that**
the transmission is a high-transmission coaxial planetary gear (46) which is configured as a Wolfrom gear, the second ring gear (60) of which is configured on a radial inside of the rotary slide valve member (20), and which is arranged in a space (44) which is fluidically connected to the flow opening (24) of the rotary slide valve member (20).

2. Rotary slide valve for a motor vehicle according to claim 1,
**characterised in that**
the space (44) is defined radially by the flow housing (10) and an actuator housing (42) connected to the flow housing (10).

3. Rotary slide valve for a motor vehicle according to claim 1 or 2,
**characterised in that**
the rotor (40) of the drive motor (34) is arranged in the space (44) in which the high-transmission coaxial planetary gear (46) is arranged.

4. Rotary slide valve for a motor vehicle according to claim 3,
**characterised in that**
a stator (38) of the drive motor (34) is separated from the rotor (40) by a separating can (32).

5. Rotary slide valve for a motor vehicle according to claim 4,
**characterised in that**
the separating can (32) is configured in one piece with the actuator housing (42).

6. Rotary slide valve for a motor vehicle according to claim 4 or 5,
**characterised in that**
the separating can (32) comprises a radially extending collar (43) which axially delimits the space (44), in which the rotor (40) and the Wolfrom gear (46) are arranged, in the direction of the stator (38).

7. Rotary slide valve for a motor vehicle according to claim 6,
**characterised in that**
a first ring gear (56) of the Wolfrom gear (46) extends axially from the collar (43) of the separating can (32).

8. Rotary slide valve for a motor vehicle according to claim 7,
**characterised in that**
the rotor (40) of the drive motor (34) is connected to a sun gear (48), which is beared with the rotor (40) on a drive axle (22) of the Wolfrom gear (46), which meshes with at least one planet gear (50), which meshes with the first ring gear (56) and the second ring gear (60), wherein the numbers of teeth of the two ring gears (56, 60) are different.

9. Rotary slide valve for a motor vehicle according to claim 8,
**characterised in that**
the Wolfrom gear (46) comprises a plurality of planet wheels (50), in the spaces between which are arranged filler pieces (62) which are attached to a planet wheel carrier (54) or are configured in one piece with the planet wheel carrier (54).

10. Rotary slide valve for a motor vehicle according to one of claims 8 or 9,
**characterised in that**
the planet wheels (50) are mounted on axles (52) of the free-floating planet wheel carrier (54).

11. Rotary slide valve for a motor vehicle according to claim 8,
**characterised in that**
the planet wheels (50) are configured to be free-floating.

12. Rotary slide valve for a motor vehicle according to one of the preceding claims,
**characterised in that**
the drive motor (34) is configured as a two-phase claw pole motor.

## Revendications

1. Vanne rotative pour véhicule automobile avec
un moteur d'entraînement (34),
une transmission (46) qui peut être mise en rotation au moyen du moteur d'entraînement (34),
un élément de vanne rotatif (20) avec au moins une ouverture d'écoulement (24),
un boîtier fluidique (10) dans lequel est supporté l'élément de vanne rotatif (20) et qui comprend au moins une entrée (12) et au moins une sortie (14), lesquelles peuvent être reliées fluidiquement par l'intermédiaire de l'ouverture d'écoulement (24) de l'élément de vanne rotatif (20),
**caractérisé en ce que**
la transmission est une transmission planétaire coaxiale à multiplication élevée (46), qui est conçue comme une transmission Wolfrom, dont la deuxième couronne (60) est formée sur un côté intérieur radial de l'élément de vanne rotative (20), et qui est disposée dans un espace (44) qui est en connexion fluidique avec l'ouverture d'écoulement (24) de l'élément de vanne rotative (20).

2. Vanne rotative pour véhicule automobile selon la revendication 1,
**caractérisé en ce que**
l'espace (44) est délimité radialement par le boîtier fluidique (10) et un boîtier d'actionneur (42) relié au boîtier fluidique (10).

3. Vanne rotative pour véhicule automobile selon la revendication 1 ou 2,
**caractérisé en ce que**
le rotor (40) du moteur d'entraînement (34) est disposé dans l'espace (44) dans lequel est disposé le train épicycloïdal coaxial à multiplication élevée (46).

4. Vanne rotative pour véhicule automobile selon la revendication 3,
**caractérisé en ce que**
un stator (38) du moteur d'entraînement (34) est séparé du rotor (40) par un pot de séparation (32).

5. Vanne rotative pour véhicule automobile selon la revendication 4,
**caractérisé en ce que**
le pot de séparation (32) est formé d'une seule pièce avec le boîtier d'actionneur (42).

6. Vanne rotative pour véhicule automobile selon la revendication 4 ou 5,
**caractérisé en ce que**
le pot de séparation (32) comprend un collier (43) s'étendant radialement et délimitant axialement, en direction du stator (38), l'espace (44) dans lequel sont disposés le rotor (40) et la transmission Wolfrom (46).

7. Vanne rotative pour véhicule automobile selon la revendication 6,
**caractérisé en ce que**
une première couronne (56) de la transmission Wolfrom (46) s'étend axialement depuis le collier (43) du pot de séparation (32).

8. Vanne rotative pour véhicule automobile selon la revendication 7,
**caractérisé en ce que**
le rotor (40) du moteur d'entraînement (34) est relié à une roue solaire (48) supportée avec le rotor (40) sur un axe de sortie (22) de la transmission Wolfrom (46) qui s'engrène avec au moins un pignon satellite (50) qui s'engrène avec la première couronne (56) et la deuxième couronne (60), les nombres de dents des deux couronnes (56, 60) étant différents.

9. Vanne rotative pour véhicule automobile selon la revendication 8,
**caractérisé en ce que**
la transmission Wolfrom (46) comprend plusieurs roues planétaires (50) dans les espaces intermédiaires desquelles sont disposées des pièces de remplissage (62) qui sont fixées à un porte-satellites (54) ou qui sont formées d'une seule pièce avec le porte-satellites (54).

10. Vanne rotative pour véhicule automobile selon l'une des revendications 8 ou 9,
**caractérisé en ce que**
les roues planétaires (50) sont supportées sur des axes (52) du porte-satellites (54) monté flottant.

11. Vanne rotative pour véhicule automobile selon la revendication 8,
**caractérisé en ce que**
les roues planétaires (50) sont conçues de manière à pouvoir flotter librement.

12. Vanne rotative pour véhicule automobile selon l'une des revendications précédentes,
**caractérisé en ce que**
le moteur d'entraînement (34) est un moteur à pôles à griffes biphasé.
